# EUROPÄISCHE PATENTSCHRIFT

(11) **EP 1 811 212 B1**
(45) Veröffentlichungstag und Bekanntmachung des Hinweises auf die Patenterteilung: **21.03.2012**
(21) Anmeldenummer: 06126446.1
(22) Anmeldetag: 19.12.2006
(51) Int. Cl.: F16K 1/226

(54) **Teileinheit eines Drosselklappenstutzens**
Subunit of a throttle valve
Elément d'un clapet d'étranglement

(30) Priorität: 18.01.2006 DE 102006002482
(43) Veröffentlichungstag der Anmeldung: 25.07.2007
(73) Patentinhaber: Continental Automotive GmbH, 30165 Hannover (DE)
(72) Erfinder: Kohlen, Peter, 61267 Neu Anspach (DE); Köhler, Stefan, 60437 Frankfurt (DE); Montigny, Rainer, 65812 Bad Soden (DE)

(56) Entgegenhaltungen:
- DE-A1- 1 902 606
- DE-A1- 10 359 609
- GB-A- 166 210
- US-A- 2 840 338
- US-A- 5 326 077

## Beschreibung

Die Erfindung bezieht sich auf eine Teileinheit eines Drosselklappenstutzens, die aus einer Drosselklappenwelle und einer Drosselklappe besteht, bei der die Drosselklappewelle mittig durch die Drosselklappe hindurchführend angeordnet ist und bei der die Drosselklappe außen eine umlaufende Nut aufweist, in der ein einziger Toleranzring angeordnet ist, der einen Spalt aufweist. Drosselklappenstutzen sind bekannt. In der DE 195 12 874 A1 wird ein Drosselklappenstutzen beschrieben, der in einem rohrartigen Gehäuse angeordnet ist. Die Drosselklappe ist dabei auf einer Drosselklappenwelle befestigt, die quer zur Längsachse des rohrartigen Gehäuses an ihren freien Enden durch Ausnehmungen in der Gehäusewand hindurchführend und in Lagern drehbar gelagert ist. Im geschlossenen Zustand trennt die Drosselklappe das Gehäuse in eine Saugseite und in eine Seite, in der Umgebungsdruck herrscht. Bei dem bekannten Drosselklappenstutzen ist es in der Regel nachteilig, dass durch den in der Saugseite anliegenden Unterdruck Leckluft über bestimmte Stellen in die Saugseite gelangen kann, was nicht erwünscht ist.

In der DE 103 10 744 A1 wird eine Teileinheit eines Drosselklappenstutzens beschrieben. Die Teileinheit besteht aus einer Drosselklappenwelle und einer Drosselklappe, wobei die Drosselklappenwelle mittig durch die Drosselklappe hindurchführend angeordnet ist. Die Drosselklappe weist außen eine umlaufende Nut auf, in der ein Toleranzring angeordnet ist, der einen Spalt aufweist. In der Regel ist in diesem Spalt ein Vorsprung angeordnet, der verhindert, dass der Toleranzring sich im Betrieb verdreht. Dabei ist jedoch nachteilig, dass im Bereich dieses Spaltes eine nicht unerhebliche Menge an Leckluft in die Saugseite des Drosselklappenstutzens gelangen kann.

Die DE 19 02 606 A1 beschreibt ein Drosselklappenventil mit einem radial inneren und einem radial äußeren Dichtungsring, wobei ein Stift in radialer Richtung in den Spalt des inneren Dichtrings ragt und diesen gegen Verdrehen sichert.

Die US-A-284038 beschreibt ein Drosselklappenventil mit zwei axial nebeneinander liegenden Dichtringen, deren Spalte versetzt zueinander sind.

Die US-A-5326077 beschreibt ein Drosselklappenventil, dessen Dichtring an seinen beiden Enden im Bereich des Spaltes radial nach innen weisende Vorsprünge aufweist, die in eine seitlich offene Nut eingreifen.

Die DE 103 59 609 A1 befasst sich mit einem Drosselklappenventil mit einem nicht näher spezifizierten Dichtring, während die GB 166210 A einen Kolbenring beschreibt, der durch einen in seinen Spalt ragenden Vorsprung gegen Verdrehen gesichert ist.

Der Erfindung liegt daher die Aufgabe zugrunde, eine Teileinheit eines Drosselklappenstutzens zu schaffen, bei dem die Menge an Leckluft, die über den Spalt des Toleranzringes in die Saugseite gelangt, möglichst klein ist.

Die der Erfindung zugrunde liegende Aufgabe wird dadurch gelöst, dass die Drosselklappe in der umlaufenden Nut in Richtung der Längsachse der Drosselklappenwelle in der Draufsicht gesehen an mindestens einer Seite einen vom Nutgrund nach außen gerichteten Vorsprung aufweist, der in eine Aussparung des Toleranzringes eingreift, der an dieser Stelle einen verjüngten Bereich aufweist, wobei der Vorsprung nicht über die Außenkante der Drosselklappe hinausragt und nicht mit der Außenkante der Drosselklappe bündig abschließt. Die Drosselklappe sowie die Drosselklappenwelle können werkstoffmäßig unterschiedlich gefertigt sein. Als Werkstoff kommen metallische Werkstoffe als auch Kunststoffe zum Einsatz. Die Drosselklappenwelle ist mittig durch die Drosselklappe hindurchführend angeordnet, worunter zu verstehen ist, dass die Drosselklappenwelle nicht seitenversetzt zum Durchmesser der Drosselklappe, sondern deren Längsachse durchlaufend durch die Drosselklappe geführt wird. Der in der umlaufenden Nut angeordnete mindestens eine Vorsprung kann im Querschnitt beispielsweise rechteckig oder parabelförmig ausgebildet sein. Er greift jeweils in eine Aussparung des Toleranzringens ein, die komplimentär zum Vorsprung konstruktiv gestaltet ist, wodurch sichergestellt ist, dass sich der Toleranzring im Betrieb nicht in der umlaufenden Nut verdreht. Dies bedeutet, dass an dieser Stelle der Toleranzring schmaler ausgebildet ist. Der Vorsprung wird konstruktiv dabei so dimensioniert, dass ein leichtes radiales Spiel des Toleranzringes möglich ist. Es hat sich in überraschender Weise gezeigt, dass sich auf diese Weise die Menge an Leckluft, die durch den Spalt in die Saugseite gelangt, nahezu minimiert werden kann. Dies ist dadurch möglich, dass die sonst übliche Spaltbreite von ungefähr 0,9 mm auf 0,2 bis 0,3 mm verkleinert werden kann, da die eigentliche Verdrehsicherung nicht im Spalt erfolgt. Der mindestens eine Vorsprung, der als Verdrehsicherung für den Toleranzring dient, ragt nicht über die Außenkante der Drosselklappe hinaus und schließt auch nicht mit ihr bündig ab. Dies bedeutet, dass im Bereich des Vorsprunges keinerlei Leckluft von der Seite, in der Umgebungsdruck herrscht, in die Saugseite gelangen kann. Durch die Anordnung des mindestens einen Vorsprunges in der umlaufenden Nut der Drosselklappe in Richtung der Längsachse der Drosselklappenwelle in der Draufsicht gesehen, wird eine beidseitige stabile Führung des Toleranzringes erreicht, die einerseits durch den jeweiligen Vorsprung und andererseits durch die innere Gehäusewand des Drosselklappenstutzens gegeben ist.

Eine bevorzugte Ausgestaltung der Erfindung sieht vor, dass der Spalt des Toleranzringes im rechten Winkel zur Längsachse der Drosselklappenwelle in der Draufsicht gesehen angeordnet ist. Dabei ist vorteilhaft, dass beide Enden des Toleranzringes, die den Spalt definieren, im Betrieb nicht verkantet zueinander verschoben werden, was die Betriebssicherheit verbessert.

Nach einer weiteren bevorzugten Ausgestaltung der Erfindung erstreckt sich der Vorsprung über die halbe Tiefe der umlaufenen Nut. Auf diese Weise wird vorteilhaft die Wirkung des Vorsprunges als Verdrehsicherung des Toleranzringes optimiert.

Gemäß einer weiteren bevorzugten Ausgestaltung der Erfindung weist die Drosselklappe in der umlaufenden Nut in Richtung der Längsachse der Drosselklappenwelle in der Draufsicht gesehen an beiden gegenüberliegenden Seiten jeweils einen vom Nutgrund nach außen gerichteten Vorsprung auf. Dies erleichtert in vorteilhafter Weise die Montage der Teileinheit und erhöht deren Stabilität. Beide Vorsprünge ragen nicht über die Außenkante der Drosselklappe hinaus und schließen auch nicht bündig mit der Außenkante der Drosselklappe ab.

Die Erfindung wird nachfolgend anhand der Zeichnung (Fig. 1 bis Fig. 5) näher und beispielhaft erläutert.
- Fig. 1: zeigt die Teileinheit des Drosselklappenstutzens in der Seitenansicht.
- Fig. 2: zeigt die Teileinheit des Drosselklappenstutzens in einer weiteren Seitenansicht.
- Fig. 3: zeigt die Teileinheit des Drosselklappenstutzens gemäß Schnitt A-A in Fig. 1 in vergrößerter Form.
- Fig. 4: zeigt die Teileinheit des Drosselklappenstutzens gemäß Schnitt B-B in Fig. 2 in vergrößerter Form.
- Fig. 5: zeigt die Teileinheit des Drosselklappenstutzens gemäß Schnitt C-C in Fig. 1.

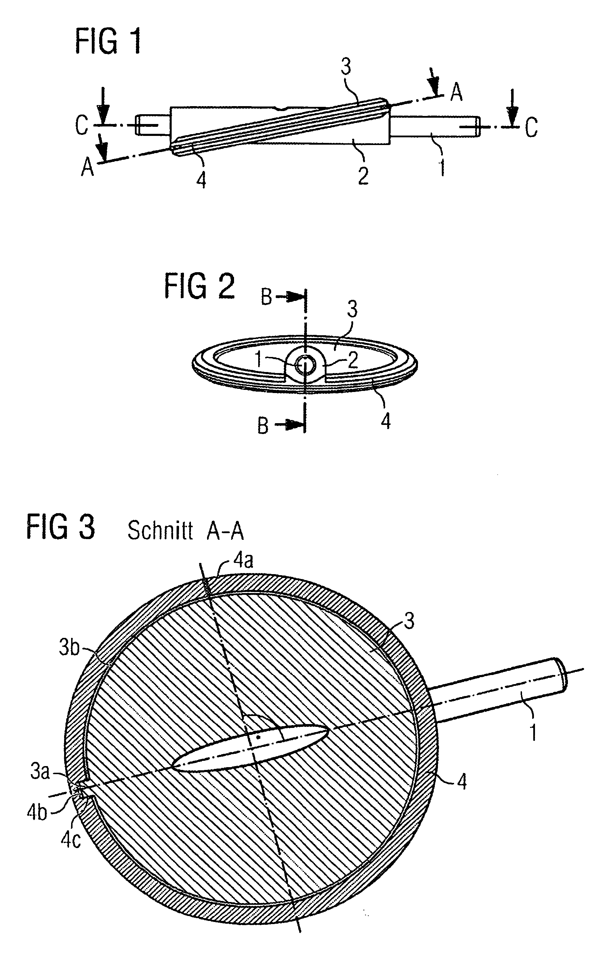

In Fig. 1 ist die Teileinheit eines Drosselklappenstutzens, die aus einer Drosselklappenwelle 1 und einer Drosselklappe 3 besteht, in der Seitenansicht dargestellt. Die Drosselklappenwelle 1 ist dabei mittig durch die Drosselklappe 3 hindurchführend angeordnet. Die Drosselklappe 3 weist außen eine umlaufende Nut (nicht dargestellt) auf, in der ein Toleranzring 4 angeordnet ist, der einen Spalt (nicht dargestellt) aufweist. Bei dieser Ausgestaltung weist die Drosselklappe 3 einen Hülsenabschnitt 2 auf, der die Drosselklappenwelle 1 umschließt.

In Fig. 2 ist die Teileinheit des Drosselklappenstutzens in einer weiteren Seitenansicht dargestellt. Die Drosselklappe 3 ist dabei kreisrund ausgebildet.

In Fig. 3 ist die Teileinheit des Drosselklappenstutzens gemäß Schnitt A-A in Fig. 1 vergrößert dargestellt. Die Drosselklappe 3 weist eine umlaufende Nut 3b auf, in der der Toleranzring 4 angeordnet ist. Die Drosselklappe 3 weist in der umlaufenden Nut 3b in Richtung der Längsachse der Drosselklappenwelle 1 in dieser Draufsicht gesehen an einer Seite einen vom Nutgrund nach außen gerichteten Vorsprung 3a auf, der in eine Aussparung 4c des Toleranzringes 4 eingreift, der an dieser Stelle einen verdünnten Bereich 4b aufweist. Der Vorsprung 3a ragt dabei nicht über die Außenkante (nicht dargestellt) der Drosselklappe hinaus und schließt auch nicht bündig dieser Außenkante der Drosselklappe 3 ab. Dies bedeutet, dass in dem Bereich des Vorsprunges 3a der Drosselklappe 3 keinerlei Leckluft in die Saugseite des Drosselklappenstutzens gelangen kann. Der Spalt 4a des Toleranzringes 4 ist im rechten Winkel zur Längsachse der Drosselklappenwelle 1 in der Draufsicht gesehen angeordnet. In bevorzugter Ausführung erstreckt sich der Vorsprung 3a über die halbe Tiefe der umlaufenden Nut 3b.

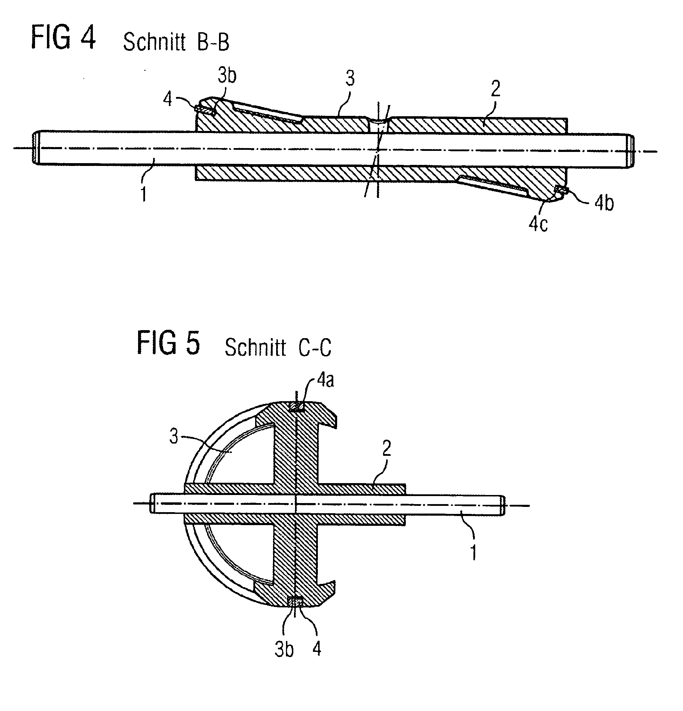

In Fig. 4 ist die Teileinheit des Drosselklappenstutzens gemäß Schnitt B-B in Fig. 2 vergrößert dargestellt. Die Drosselklappenwelle 1 ist mittig durch die Drosselklappe 3 durchführend angeordnet.

In Fig. 5 ist die Teileinheit des Drosselklappenstutzens gemäß Schnitt C-C in Fig. 1 dargestellt. Der Spalt 4a des Toleranzringes 4 ist im rechten Winkel zur Längsachse der Drosselklappenwelle 1 in dieser Draufsicht gesehen angeordnet.

## Patentansprüche

1. Teileinheit eines Drosselklappenstutzens, die aus einer Drosselklappenwelle (1) und einer Drosselklappe (3) besteht, bei der die Drosselklappenwelle (1) mittig durch die Drosselklappe (3) hindurchführend angeordnet ist, und bei der die Drosselklappe (3) außen eine umlaufende Nut (3b) aufweist, in der ein einziger Toleranzring (4) angeordnet ist, der einen Spalt (4a) aufweist, **dadurch gekennzeichnet, dass** die Drosselklappe (3) in der umlaufenden Nut (3b) in Richtung der Längsachse der Drosselklappenwelle (1) in der Draufsicht gesehen an mindestens einer Seite einen vom Nutgrund nach außen gerichteten Vorsprung (3a) aufweist, der in eine Aussparung (4c) des Toleranzringes (4) eingreift, der an dieser Stelle einen verjüngten Bereich (4b) aufweist, wobei der Vorsprung (3a) nicht über die Außenkante der Drosselklappe (3) hinausragt und nicht mit der Außenkante der Drosselklappe (3) bündig abschließt.

2. Teileinheit nach Anspruch 1, **dadurch gekennzeichnet , dass** der Spalt (4a) des Toleranzringes (4) im rechten Winkel zur Längsachse der Drosselklappenwelle (1) in der Draufsicht gesehen angeordnet ist.

3. Teileinheit nach Anspruch 1 oder Anspruch 2, **dadurch gekennzeichnet, dass** sich der Vorsprung (3a) über die halbe Tiefe der umlaufenden Nut (3b) erstreckt.

4. Teileinheit nach einem der Ansprüche 1 bis 3, **dadurch gekennzeichnet, dass** die Drosselklappe (3) in der umlaufenden Nut (3b) in Richtung der Längsachse der Drosselklappenwelle (1) in der Draufsicht gesehen an beiden gegenüberliegenden Seiten jeweils einen vom Nutgrund nach außen gerichteten Vorsprung (3a) aufweist.

## Claims

1. Subunit of a throttle valve housing, which subunit consists of a throttle valve shaft (1) and a throttle valve (3), in which subunit the throttle valve shaft (1) is arranged so as to lead centrally through the throttle valve (3), and in which subunit the throttle valve (3) has, on the outside, a circumferential groove (3b), in which a single tolerance ring (4) is arranged which has a gap (4a), **characterized in that**, in the circumferential groove (3b) in the direction of the longitudinal axis of the throttle valve shaft (1), the throttle valve (3) has, as viewed in plan view, a projection (3a) which is directed outwards from the groove bottom on at least one side, which projection (3a) engages into a cut-out (4c) of the tolerance ring (4) which has a tapered region (4b) at this point, the projection (3a) not protruding beyond the outer edge of the throttle valve (3) and not terminating flushly with the outer edge of the throttle valve (3).

2. Subunit according to Claim 1, **characterized in that** the gap (4a) of the tolerance ring (4) is arranged at a right angle to the longitudinal axis of the throttle valve shaft (1), as viewed in plan view.

3. Subunit according to Claim 1 or Claim 2, **characterized in that** the projection (3a) extends over half the depth of the circumferential groove (3b).

4. Subunit according to one of Claims 1 to 3, **characterized in that**, in the circumferential groove (3b) in the direction of the longitudinal axis of the throttle valve shaft (1), the throttle valve (3) has, as viewed in plan view, in each case one projection (3a) which is directed outwards from the groove bottom on both sides which lie opposite one another.

## Revendications

1. Elément de corps de papillon, qui est constitué d'un arbre (1) de papillon et d'un papillon (3), dans lequel l'arbre (1) de papillon est disposé au milieu en traversant le papillon (3) et dans lequel le papillon (3) a, à l'extérieur, une rainure (3b) de pourtour, dans laquelle est montée une bague (4) unique de tolérance, laquelle a une fente (4a), **caractérisé en ce que** le papillon (3) a, dans la rainure (3b) de pourtour dans la direction de l'axe longitudinal de l'arbre (3) du papillon vu en plan sur au moins un côté, une saillie (3a) dirigée du fond de la rainure vers l'extérieur et pénétrant dans un évidement (4c) de la bague (4) de tolérance, qui a en ce point une zone (4b) rétrécie, la saillie (3a) ne dépassant pas du bord extérieur du papillon (3) et s'étendant à affleurement avec le bord extérieur du papillon (3).

2. Elément suivant la revendication 1, **caractérisé en ce que** la fente (4a) de la bague (4) de tolérance est dans la vue en plan à angle droit avec l'axe longitudinal de l'arbre (1) de papillon.

3. Elément suivant la revendication 1 ou la revendication 2, **caractérisé en ce que** la saillie (3a) s'étend sur la moitié de la profondeur de la rainure (3b) de pourtour.

4. Elément suivant l'une des revendications 1 à 3, **caractérisé en ce que** le papillon (3) a dans la rainure (3b) de pourtour, dans la direction de l'axe longitudinal de l'arbre (1) de papillon, dans la vue en plan, sur deux côtés opposés respectivement une saillie (3a) dirigée du fond de la rainure vers l'extérieur.
